# FASCICULE DE BREVET EUROPEEN

(11) **EP 2 909 787 B1**
(45) Date de publication et mention de la délivrance du brevet: **31.07.2019**
(21) Numéro de dépôt: 13777055.8
(22) Date de dépôt: 15.10.2013
(51) Int. Cl.: G06K 9/00

(54) **PROCÉDÉ D'AUTHENTIFICATION D'UNE CAPTURE D'IMAGE D'UNE ENTITÉ TRIDIMENSIONNELLE**
VERFAHREN ZUR AUTHENTIFIKATION EINER ERFASSUNG EINER DREIDIMENSIONALEN ENTITÄT
PROCESS FOR AUTHENTIFYING A CAPTURE OF AN IMAGE OF A TRIDIMENSIONAL ENTITY

(30) Priorité: 18.10.2012 FR 1259962
(43) Date de publication de la demande: 26.08.2015
(73) Titulaire: Idemia Identity & Security France, 92400 Courbevoie (FR)
(72) Inventeur: DIDIER, Bernard, 92400 COURBEVOIE (FR)
(74) Mandataire: Lavialle, Bruno François Stéphane
(86) Numéro de dépôt international: PCT/EP2013/071561
(87) Numéro de publication internationale: WO 2014/060441

(56) Documents cités:
- JP-A- 2003 178 306
- JP-A- 2004 362 079
- US-A1- 2007 226 509
- US-A1- 2011 254 942
- US-A1- 2012 063 671
- Stan Li: "Encyclopedia of Biometrics", 1 janvier 2009 (2009-01-01), Springer, XP002697617, pages 908-915, page 911, colonne de gauche, ligne 29 - colonne de droite, ligne 39
- Harry Wechsler: "Reliable Face Recognition Systems", 1 janvier 2007 (2007-01-01), Springer, XP002697618, pages 193-196, le document en entier
- Gang Pan et al: "Liveness Detection for Face Recognition", Recent Advances in Face Recognition, 1 juin 2008 (2008-06-01), pages 109-124, XP055063042, ISBN: 978-9-53-761934-3 Extrait de l'Internet: URL:http://cdn.intechopen.com/pdfs/5896/In Tech-Liveness_detection_for_face_recogniti on.pdf [extrait le 2013-05-15]
- BUNDESMINISTERIUM DER JUSTIZ ED - BUNDESMINISTERIUM DER JUSTIZ: "Handbuch der Rechtsförmlichkeit,Teil B: Allgemeine Empfehlungen für das Formulieren von Rechtsvorschriften; 1: Sprachliche Gestaltung von Gesetzen und Rechtsverordnungen", HANDBUCH DER RECHTSFÖRMLICHKEIT, BUNDESANZEIGER VERLAG, PAGE(S) 1 - 38 , 1 janvier 2008 (2008-01-01), XP002686041, Extrait de l'Internet: URL:http://hdr.bmj.de/page_b.1.html [extrait le 2012-10-25]
- BURTON A M: "A MODEL OF HUMAN FACE RECOGNITION", LOCALIST CONNECTIONISTS APPROACHES TO HUMAN COGNITION, XX, XX, 1 janvier 1989 (1989-01-01), pages 75-100, XP008043161,
- D.C. Hay and A.W. Young: In: H.D. Ellis et al: "Normality and pathology in cognitive functions", 1 janvier 1982 (1982-01-01), Academic Press, XP001199783, Cité pour montrer que la technique selon la revendication 5 n'exclue pas les activités intellectuelles; figure 1
- "Chapter 11: Step-by-Step Building a 3-D Model from Images" In: Yi Ma et al: "An Invitation to 3-D Vision : From Images to Geometric Models", 1 janvier 2004 (2004-01-01), Springer, XP002697619, pages 375-411, le document en entier
- KOLLREIDER K ET AL: "Evaluating Liveness by Face Images and the Structure Tensor", AUTOMATIC IDENTIFICATION ADVANCED TECHNOLOGIES, 2005. FOURTH IEEE WORK SHOP ON BUFFALO, NY, USA 17-18 OCT. 2005, PISCATAWAY, NJ, USA,IEEE, 17 octobre 2005 (2005-10-17), pages 75-80, XP010856500, DOI: 10.1109/AUTOID.2005.20 ISBN: 978-0-7695-2475-7

## Description

L'invention concerne le domaine des procédés de capture d'image d'entité tridimensionnelle et en particulier les procédés permettant l'authentification d'une telle capture.

### ARRIERE PLAN DE L'INVENTION

On sait capturer une image d'une entité tridimensionnelle à l'aide d'un capteur optique. Toutefois la demanderesse a constaté qu'il est difficile de savoir si cette image capturée a bien été prise en positionnant réellement le capteur optique en vis-à-vis de l'objet tridimensionnel. Des procédés sont connus des documents brevet US2007/226509A1, JP2004362079, US201254942 et JP2003178306.

### OBJET DE L'INVENTION

Un objet de l'invention est donc de fournir un procédé d'authentification d'une capture d'image d'une entité tridimensionnelle ainsi qu'un terminal informatique portable permettant la mise en oeuvre d'un tel procédé.

### RESUME DE L'INVENTION

A cet effet, selon un premier aspect, l'invention concerne un procédé d'authentification d'une capture d'image d'une entité tridimensionnelle conforme à la revendication 1.

Grâce à l'invention, si la cohérence est vérifiée entre le déplacement apparent calculé à l'aide des images capturées et le déplacement réel estimé à l'aide du capteur, alors on peut conclure que la série d'images de l'entité tridimensionnelle a bien été générée en déplaçant réellement le capteur optique autour de l'entité tridimensionnelle réelle.

L'invention donne ainsi un moyen pour authentifier une capture d'image d'une entité tridimensionnelle.

En particulier, grâce à l'invention, on peut détecter le cas où l'image capturée aurait été obtenue en déplaçant le capteur optique devant une image bidimensionnelle déjà réalisée d'un objet tridimensionnel. En effet, dans ce cas, le procédé de l'invention permettrait d'observer qu'il n'y a pas de cohérence entre le déplacement réel du capteur et le déplacement apparent observé sur les images. Le déplacement apparent serait différent du déplacement réel du capteur optique et il n'y aurait pas de corrélation / cohérence entre ces déplacements. En l'absence d'une telle corrélation / cohérence, la capture d'image tridimensionnelle n'est pas authentifiée.

Pour la compréhension de l'invention, on note que :
- par déplacement apparent, on entend un déplacement estimé du capteur optique déterminé par l'observation du déplacement relatif entre des points caractéristiques visibles sur plusieurs images de la série ;
- par déplacement réel estimé, on entend un déplacement du capteur optique entre les moments où sont capturées les deux images, ce déplacement est déterminé par des mesures du déplacement dans l'espace du capteur optique par rapport à un référentiel donné (ce référentiel peut être ou non fixe par rapport à l'entité tridimensionnelle observée) ;
- par entité tridimensionnelle, on entend un objet volumique, par opposition à un objet plat bidimensionnel, cette entité tridimensionnelle étant telle que sa projection orthogonale sur un plan varie en fonction de l'orientation de cette entité tridimensionnelle par rapport au plan.

Dans un mode particulier, ce procédé d'authentification selon l'invention comporte une étape additionnelle selon laquelle, à partir de la détermination de cohérence, on génère un indicateur d'authentification de la capture d'image de l'entité tridimensionnelle, cet indicateur dépendant de la cohérence entre le déplacement apparent du capteur optique entre ces deux images et le déplacement réel estimé du capteur optique entre ces deux images.

Selon un second aspect, l'invention concerne aussi un procédé d'identification d'un individu, utilisant le procédé de détection de cohérence précité. Ce procédé d'identification de l'individu, comprenant des étapes de :
-1- générer la série d'images en déplaçant le capteur optique autour d'une entité qui est une partie au moins de l'individu à identifier ; et
-2- rechercher une correspondance entre :
   - des données d'identification générées à partir de caractéristiques physiques de l'individu issues de l'une au moins des images de la série d'images ; et
   - des données d'identification d'individu(s) contenues dans une base de données préenregistrée, ces données d'identification préenregistrées dans la base de données étant associées à au moins une identité d'un individu ; puis de
-3- générer un indicateur d'identification de l'individu à identifier dépendant de ladite recherche de correspondance.

Dans ce procédé d'identification, l'entité tridimensionnelle est un individu à identifier, dont on capture une série d'images en déplaçant le capteur optique autour d'une partie de l'individu, telle que sa main ou sa tête. Au moins une image de cette série est utilisée pour déterminer des données d'identification de l'individu qui sont représentatives de certaines de ses caractéristiques physiques. Si la / les images capturées de la série d'images est / sont bien authentifiée(s) comme appartenant à une capture d'image d'une entité tridimensionnelle, alors on en déduit que les données d'identification de l'individu sont bien représentatives de l'individu à identifier, ces données pouvant dès lors être utilisées pour identifier l'individu.

On note que les caractéristiques physiques utilisables pour identifier l'individu peuvent être des formes, des positions relatives de parties de l'individu telles que les commissures des lèvres, le bout du nez, narines, coin des yeux, bout des oreilles, empreintes digitales ou être le résultat de traitement sur l'image (comme, par exemple, les réponses à des filtrages locaux).

Les données d'identification issues de l'image capturée sont comparées avec des données d'identification contenues dans une base de données préenregistrée afin de rechercher une correspondance entre ces données d'identification. En fonction du résultat de cette recherche de correspondance, on génère un indicateur d'identification de l'individu.

Typiquement, l'indicateur d'identification prend une première valeur donnée s'il existe une correspondance suffisante entre les données d'identification issues de la / des image(s) et les données d'identification contenues dans la base de données.

L'indicateur d'identification prend une seconde valeur différente de la première valeur, lorsqu'il y a une correspondance insuffisante entre les données d'identification issues des images et les données d'identification contenues dans la base.

Il existe plusieurs méthodes connues de l'homme du métier du domaine de la biométrie pour rechercher une correspondance entre ces données d'identification issues d'image(s) avec des données d'identification stockées dans une base de données. Selon certaines de ces méthodes, on peut considérer que la correspondance est suffisante si le nombre de similarités entre les données d'identification issues des images et les données d'identification d'individu contenues dans la base est supérieur à un seuil prédéterminé.

Inversement, si ce nombre de similarités est inférieur à ce seuil prédéterminé, alors on considère que la correspondance est insuffisante et l'indicateur d'identification prend la seconde valeur. Cette seconde valeur peut être un message tel que « individu non identifié ».

Selon un troisième aspect, l'invention porte sur terminal informatique portable tel qu'un téléphone intelligent. Ce terminal est essentiellement caractérisé en ce qu'il est adapté à mettre en oeuvre le procédé d'authentification d'une capture d'image d'une entité tridimensionnelle selon l'invention et préférentiellement le procédé d'identification selon l'invention.

A cet effet, le terminal informatique portable est conforme à la revendication 8.

Ce terminal est particulièrement avantageux car il permet à peu de frais, avec des téléphones communs dotés de capteurs optique et de position, de réaliser des captures d'images authentifiées d'entité tridimensionnelle.

Un tel terminal comporte préférentiellement des moyens de lecture dans une base de données contenant des données d'identification d'au moins un individu. Cette base de données peut être stockée dans une mémoire du terminal et/ou dans une mémoire distante du terminal, les moyens de lecture étant agencés pour lire des données de cette base.

Dans ce mode de réalisation, le terminal comporte aussi :
-1- des moyens d'analyse de la série d'images agencés pour générer des données d'identification à partir de caractéristiques physiques, d'au moins un individu, visibles sur l'une au moins des images de la série d'images ;
-2- des moyens pour rechercher une correspondance entre :
   - des données d'identification de l'individu générées par les moyens d'analyse ; et
   - des données d'identification d'individu lues dans la base de données à l'aide desdits moyens de lecture ;
-3- des moyens pour générer un indicateur d'identification de l'individu à identifier dépendant de ladite recherche de correspondance.

Dans ce mode de réalisation, le terminal est adapté non seulement à capturer des images d'une entité tridimensionnelle, c'est-à-dire de l'individu à identifier, mais aussi à utiliser l'une au moins des images de la capture authentifiée pour identifier l'individu en question. L'identification de l'individu est ainsi sécurisée contre un risque d'avoir une fausse identification par présentation d'une image d'un individu devant le capteur optique. Ici, seule la présence réelle de l'individu devant l'optique est susceptible de conduire à une identification.

Selon ce mode de réalisation de l'invention, le terminal peut aussi comporter des moyens pour conditionner l'exécution d'au moins une application informatique en fonction d'une part de la cohérence déterminée entre les deux images de la série d'images et d'autre part en fonction de l'indicateur d'identification de l'individu.

Ces moyens pour conditionner l'exécution d'au moins une application peuvent être une gestion de droits d'accès au terminal informatique. Ainsi, si l'indicateur d'identification prend une première valeur l'accès au terminal, ou à une application de ce terminal, est interdit. A contrario, si l'indicateur d'identification prend la seconde valeur, l'accès au terminal ou à l'application est autorisé.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- la figure 1 présente un terminal selon l'invention réalisant une capture d'une série d'images d'une entité tridimensionnelle en pivotant le capteur optique du terminal autour de l'entité ;
- la figure 2 présente la série d'images capturées par le terminal à la figure 1 ;
- la figure 3 présente une image authentifiée issue d'une capture d'image tridimensionnelle ;
- la figure 4 schématise les étapes fonctionnelles nécessaires pour mettre en oeuvre les procédés d'authentification et d'identification selon l'invention.

### DESCRIPTION DETAILLEE DE L'INVENTION

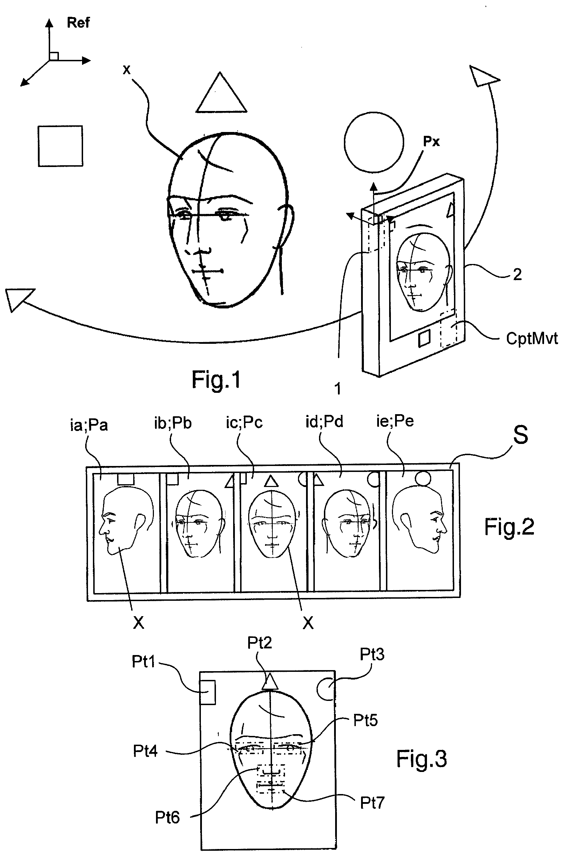

Comme indiqué précédemment, l'invention concerne un procédé d'authentification d'une capture d'image d'une entité tridimensionnelle. Sur les figures 1 à 4, l'entité tridimensionnelle représentée est une tête d'un individu que l'on veut identifier avec un procédé d'identification selon l'invention. Le procédé d'authentification permet de s'assurer que l'individu X à identifier est bien présent devant un capteur optique 1.

Pour mettre en oeuvre ces procédés, on utilise un terminal informatique 2 qui est ici un téléphone portable 2. Ce terminal comporte des moyens d'interface homme / machine pour permettre à l'utilisateur X d'interagir avec le terminal 2 et au terminal de donner des informations à l'utilisateur. En l'occurrence, ces moyens d'interface comportent un écran, un clavier et/ou des moyens tactiles pouvant être superposés ou non à l'écran.

Ce terminal dispose aussi d'un processeur et d'au moins une mémoire où est stocké un programme informatique agencé pour exécuter les procédés selon l'invention. Ce processeur est lui-même relié aux moyens d'interface homme / machine afin d'exécuter les procédés.

Ce téléphone 2 comprend un capteur optique 1 tel qu'une caméra 1 et des moyens CptMvt pour générer des informations représentatives des positions dans l'espace du capteur optique 1 par rapport à un référentiel spatial donné Ref. Ce référentiel spatial Ref peut être de plusieurs sortes, tel qu'un référentiel terrestre présentant un axe vertical, un axe orienté vers le nord et un axe orienté vers l'est ou l'Ouest. L'origine du référentiel peut par exemple être positionnée de manière arbitraire par le terminal. Par exemple le référentiel peut être centré sur un point caractéristique du visage de l'individu qui est détecté par le terminal ou être centré sur l'emplacement où se trouve le terminal 2 au moment où il capture une image ia d'une série d'images S.

Pour générer les informations représentatives des positions Pa, Pb, Pc, Pd, Pe dans l'espace du capteur optique 1, le terminal peut utiliser des données provenant de capteurs qu'il incorpore et qui sont fixes par rapport au capteur optique 1.

En l'occurrence, les informations de position dans l'espace du capteur 1 peuvent être générées à l'aide :
- d'un ou plusieurs capteurs de données inertielles tel qu'un accéléromètre CptMvt ; et/ou
- d'au moins un capteur de données de rotation tel qu'un gyromètre et/ou au moins un capteur gyroscopique ; et/ou

- d'un ou plusieurs capteurs d'orientation tel qu'un capteur magnétique formant une boussole détectant le nord magnétique terrestre; et/ou
- d'un ou plusieurs capteurs de niveau pour connaître l'inclinaison du capteur optique par rapport à un axe vertical terrestre ; et/ou
- d'un ou plusieurs capteurs de localisation d'un système de géo localisation tel que de la géo localisation par rapport à des satellites et/ou de la géo localisation par rapport à des antennes fixes.

Le référentiel Ref et son origine sont choisis principalement en fonction du type de capteurs de positionnement utilisé pour la détermination du déplacement spatial du capteur optique. Ainsi, ce référentiel pourra par exemple être un référentiel déterminé par rapport à des éléments constitutifs d'un système de géo localisation par satellite ou par rapport à un réseau d'antennes relai d'un système de communication téléphonique.

Le procédé d'authentification peut comprendre une instruction de début, consistant à demander à l'utilisateur de déplacer le terminal autour de l'individu X pour en capturer des images. Lors du déplacement du terminal autour de l'individu, le capteur 1 engendre une série d'images S de cet individu X et de l'arrière plan.

Des moyens d'association intégrés au terminal associent chaque image de la série d'images S à une information représentative de la position dans l'espace du capteur optique 1 au moment où il a généré cette image.

Ainsi, comme on le voit sur la figure 2, on associe les données de déplacement réel respectives de l'optique Pa, Pb, Pc, Pd, Pe par rapport au référentiel Ref avec les images ia, ib, ic, id, ie de la série d'images S.

Ces images, positions et associations entre images et positions sont mémorisées dans des mémoires du terminal.

Des moyens de détermination de cohérence entre deux images de la série d'images, sont également intégrés au terminal et reliés aux mémoires du terminal. Ces moyens peuvent comprendre une application de détection de cohérence exécutée par un processeur du terminal et ayant pour fonction de vérifier s'il existe une cohérence entre :
- le déplacement apparent du capteur optique 1 déterminé par comparaison entre des points caractéristiques Pt1, Pt2, Pt3, Pt4, Pt5, Pt6, Pt7 visibles au moins sur deux images ia, ic de la série S ; et
- un déplacement réel estimé du capteur optique 1 déterminé par comparaison des informations représentatives des positions Pa, Pb, Pc, Pd, Pe dans l'espace du capteur optique 1 aux moments où il a généré ces deux images ia, ic.

Certains des points caractéristiques Pt4, Pt5, Pt6, Pt7 visibles sur les images ia, ic sont utilisés pour déterminer le déplacement apparent du capteur optique 2 entre les deux images ia, ic. Ces points caractéristiques sont des caractéristiques physiques de l'individu à identifier visibles sur ces deux images ia, ic.

Idéalement, ces mêmes caractéristiques physiques sont aussi utilisées dans la recherche de correspondance entre :
- les données d'identification Idx générées à partir de caractéristiques physiques de l'individu X issues de l'une au moins des images ic de la série d'images S ; et
- les données d'identification Idn d'individu(s) contenues dans la base de données préenregistrée.

Le volume de calculs nécessaires à la mise en oeuvre des procédés est ainsi réduit en utilisant un même jeu de caractéristiques physiques de l'individu pour d'une part déterminer le déplacement du capteur optique entre deux images et d'autre part pour identifier cet individu.

On note que certains au moins des points caractéristiques visibles sur les images qui sont utilisés pour déterminer le déplacement apparent du capteur optique peuvent comporter des caractéristiques Pt1, Pt2, Pt3 des images ia, ib, ic, id, ie qui sont visibles en arrière plan de l'individu X à identifier.

Le déplacement apparent du capteur optique par au repère Ref est déterminé en observant les déplacements relatif de caractéristiques visibles sur au moins deux images.

Par exemple, à l'aide de procédés d'analyse d'images, on sait déterminer le déplacement apparent d'un capteur optique 1 par rapport à un référentiel Ref fixe, par rapport à la tête de l'individu X ou par rapport à l'arrière plan. Ainsi, entre l'image ia et l'image 1c, on constate que le capteur optique 1 a pivoté de 90° autour de l'entité X.

Une première façon de déterminer qu'il y a eu un déplacement apparent de 90° autour de l'individu X entre les images ia et ic, peut être l'observation du déplacement de la caractéristique d'arrière plan « carré » par rapport à l'individu X. Ainsi, un algorithme peut déterminer que puisque le carré est visible derrière l'individu X sur l'image la puis à gauche de cet individu sur l'image ic, et puisqu'il est toujours resté du même côté du « triangle » d'arrière plan, il y a bien eu un pivotement de 90° du capteur 1 par rapport à un axe du référentiel Ref.

Selon un autre procédé, en observant le déplacement apparent de points caractéristiques du visage les un par rapport aux autres entre ces images la et ic, on peut déterminer cette même rotation de 90°. Par exemple, sur l'image ia, le nez Pt6 est visible sous l'oeil gauche Pt5, ce qui implique que l'individu X est de profil gauche. Sur ic, l'oeil gauche Pt5 de X est visible à droite d'un axe passant par le nez Pt6 et est à équidistance de l'oeil droit Pt4. On en déduit aisément que l'image ic est une image de face et qu'il y a donc eu, entre ia et ic, une rotation apparente du capteur de 90° par rapport à l'individu X et par rapport au référentiel Réf. Un algorithme peut ainsi reconnaître des points caractéristiques du visage de l'individu X et en fonction de leurs déplacements relatifs apparents déterminer le déplacement apparent du capteur 1 par rapport à l'individu X ou au référentiel Réf.

On sait d'après les positions réelles dans l'espace Pa et Pc associées aux images ia et ic, que le capteur optique 1 a effectivement effectué une rotation de 90° entre les images ia et ic.

Entre les images ia et ic, on détermine bien un déplacement apparent du capteur de 90° par rapport à l'entité X et un déplacement réel estimé de 90° par rapport à la référence Réf. Il y a donc une cohérence entre déplacements apparent et réel et la série des images ia, ib, ic, id, ie est bien authentifiée.

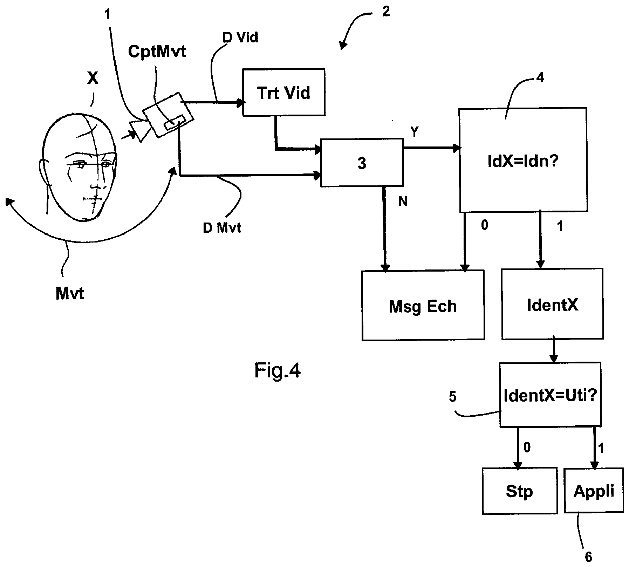

Comme on le voit en particulier sur la figure 4, le terminal 2 qui porte le capteur optique 1 et le capteur de mouvement Cptmvt génère un flux de données de positionnement Dmvt permettant de déterminer le déplacement réel estimé entre deux images et un flux de données vidéo Dvid permettant de transmettre les images de la série. Ces flux peuvent être séparés ou combinés grâce à un protocole de codage de données images indiquant pour chaque image un horodatage et une position de prise de vue correspondante par rapport au référentiel Ref.

Le flux vidéo DVid est acheminé vers un module de traitement vidéo qui détermine les déplacements apparents entre certaines au moins des images de la série. Un module de détermination de cohérence 3 compare les déplacements réels et apparents entre images.

Dans le cas où la cohérence n'est pas déterminée, alors un message d'échec d'authentification MsgEch est émis et dans ce cas on peut décider de ne pas chercher à identifier l'individu X.

Au contraire, si une cohérence est observée alors une valeur Y est envoyée à un module 4 d'identification adapté pour comparer :
- des données Idx d'identification générées à partir de caractéristiques physiques Pt4, Pt5, Pt6, Pt7, de l'individu X issues de l'une au moins des images de la série S ; avec
- des données Idn d'identification d'au moins un individu contenues dans une base de données.

On note que les données Idx générées à partir des caractéristiques de l'individu X visibles sur les images sont préférentiellement générées par le module de traitement vidéo TrtVid.

Si une correspondance est trouvée par les moyens 4 entre une des données d'identification Idn contenues dans la base et les données Idx relatives à l'individu X, alors le module 4 génère un indicateur d'identification IdentX précisant que l'individu X est bien identifié. Cet indicateur IdentX peut être un identifiant de l'individu X tel qu'un fichier contenant des caractéristiques propres à l'individu, telles que son nom, une photo d'identité.

Un module complémentaire 5 du terminal peut être utilisé pour déterminer si l'individu identifié par l'indicateur IdentX est bien aussi un utilisateur Uti autorisé du terminal. S'il est autorisé, l'utilisation de l'application Appli (module d'application 6) est autorisée. Dans le cas contraire, si l'individu X n'est pas un utilisateur Uti autorisé, alors une instruction Stp d'arrêt ou de blocage du terminal est émise. Le procédé d'identification selon l'invention peut ainsi conditionner le déblocage d'une application écran de veille du terminal.

L'invention peut être mise en oeuvre en comparant plusieurs déplacements apparents avec plusieurs déplacements réels mesurés / observés entre plusieurs couples d'images d'une série d'images capturées.

On note que le procédé peut aussi comporter la capture de plusieurs séries d'images de l'entité tridimensionnelle pour par exemple réaliser une moyenne entre les résultats de la détermination de cohérence.

La détermination de la cohérence entre déplacements apparent(s) et réel(s) peut aussi être effectuée en tenant compte de marges d'erreur dans la détermination de chacun de ces déplacements. En particulier, ces déplacements estimés peuvent ne pas être exactement identiques tout en restant dans une marge d'erreur tolérée, éventuellement prédéterminée. Dans ce cas, la cohérence est quand même déterminée et la capture d'image(s) authentifiée. Si la comparaison entre ces déplacements apparent et réel démontre un écart trop important entre ces déplacements estimés, cet écart allant au-delà de la marge d'erreur tolérée, alors on considère qu'il n'y a pas de cohérence entre les déplacements et la capture d'image(s) n'est pas authentifiée.

## Revendications

1. Procédé d'authentification d'une capture d'image (ic) d'une entité tridimensionnelle (X), ce procédé d'authentification étant implémenté par un dispositif et comprenant les étapes :
- d'engendrer une série (S) d'images (ia, ib, ic, id, ie) de l'entité (X) à l'aide d'un capteur optique (1) déplacé autour de l'entité (X) ;
- d'associer à chaque image (ia, ib, ic, id, ie) de la série d'images (S) une information (Pa, Pb, Pc, Pd, Pe) représentative de la position dans l'espace du capteur optique (1) au moment où il a généré cette image, cette position étant déterminée par rapport à un référentiel spatial donné (Ref) ; et
- de déterminer une cohérence entre deux images de la série, en vérifiant une cohérence entre :
- un déplacement apparent du capteur optique (2) déterminé par comparaison entre des points caractéristiques (Pt1, Pt2, Pt3, Pt4, Pt5, Pt6) visibles sur ces deux images ; et
- un déplacement réel estimé du capteur optique déterminé par comparaison des informations représentatives des positions dans l'espace du capteur optique (1) aux moments où il a généré ces deux images.

2. Procédé d'identification d'un individu, utilisant le procédé d'authentification d'une capture d'image selon la revendication 1, comprenant des étapes de :
- générer la série d'images (S) en déplaçant le capteur optique (1) autour de ladite entité (X) qui est une partie de l'individu à identifier ; et
- rechercher une correspondance (4) entre :
- des données d'identification (Idx) générées à partir de caractéristiques physiques de l'individu issues de l'une au moins des images (ic) de la série d'images (s) ; et
- des données d'identification (Idn) d'individu contenues dans une base de données préenregistrée, ces données d'identification préenregistrées (Idn) dans la base de données étant associées à au moins une identité (IdentX) d'un individu ; puis de
- générer un indicateur d'identification (IdentX) de l'individu à identifier dépendant de ladite recherche de correspondance (4).

3. Procédé d'identification d'un individu selon la revendication 2, dans lequel les informations représentatives des positions (Pa, Pb, Pc, Pd) dans l'espace du capteur optique (1) sont générées à l'aide :
- d'au moins un capteur de données inertielles (CptMvt) tel qu'un accéléromètre ; ou
- d'au moins un capteur de données de rotation tel qu'un gyromètre ; ou
- d'au moins un capteur d'orientation tel qu'un capteur magnétique formant une boussole ; ou
- d'au moins un capteur de niveau pour connaitre l'inclinaison du capteur optique par rapport à un axe vertical ; ou
- au moins un capteur de localisation d'un système de géo localisation tel que de la géo localisation par satellites ou de la géo localisation par rapport à des antennes fixes.

4. Procédé d'identification d'un individu selon l'une quelconque des revendications 2 ou 3, dans lequel certains au moins des points caractéristiques visibles sur les images et utilisés pour déterminer le déplacement apparent du capteur optique (2) entre deux images (ia, ic) comportent des caractéristiques physiques de l'individu à identifier qui sont au moins visibles sur ces deux images (ia, ic).

5. Procédé d'identification selon la revendication 4, dans lequel certaines au moins des caractéristiques physiques de l'individu à identifier qui sont utilisées pour déterminer le déplacement apparent du capteur optique sont aussi utilisées pour rechercher la correspondance entre :
- les données d'identification (IdX) générées à partir de caractéristiques physiques de l'individu issues de l'une au moins des images (ic) de la série d'images (S) ; et
- les données d'identification (Idn) d'individu contenues dans une base de données préenregistrée.

6. Procédé d'identification d'un individu selon l'une quelconque des revendications 2 à 5, dans lequel certains au moins des points caractéristiques visibles sur les images (Pt1, Pt2, Pt3) et qui sont utilisés pour déterminer le déplacement apparent du capteur optique comportent des caractéristiques des images qui sont visibles en arrière plan de l'individu à identifier.

7. Procédé d'identification d'un individu selon l'une quelconque des revendications 2 à 6, dans lequel la base de données contient des données d'identification de plusieurs individus, ces données d'identification préenregistrées étant respectivement associées aux identités de ces individus (IdentX).

8. Terminal informatique portable (2) tel qu'un téléphone intelligent, comportant :
- un capteur optique (1) adapté pour engendrer une série d'images (ia, ib, ic, id, ie) d'un individu réalisée en déplaçant le capteur autour d'au moins une partie de l'individu ;
- des moyens (CptMvt) agencés pour générer des informations (Dmvt) représentatives des positions (Pa, Pb, Pc, Pd, Pe) dans l'espace du capteur optique (1) par rapport à un référentiel spatial donné (Ref), **caractérisé en ce qu'**il comporte en outre :
- des moyens agencés pour associer à chaque image d'une pluralité d'images de la série d'images, une information représentative de la position dans l'espace du capteur optique au moment où il a généré cette image, chaque position (Pa, Pb, Pc, Pd, Pe) étant déterminée à l'aide desdits moyens (CptMvt) agencés pour générer des informations représentatives des positions du capteur optique (1) ; et
- des moyens (3) de détermination de cohérence entre deux images (ia, ic) de la série (S) d'images, ces moyens (3) étant agencés pour vérifier s'il existe une cohérence entre :
- un déplacement apparent du capteur optique déterminé par comparaison entre des points caractéristiques (Pt1, Pt2, Pt3, Pt4, Pt5, Pt6) visibles sur ces deux images (ia, ic) ; et
- un déplacement réel estimé du capteur optique déterminé par comparaison des informations représentatives des positions dans l'espace (Pa, Pc) du capteur optique (1) aux moments où il a généré ces deux images (ia, ic).

9. Terminal selon la revendication 8, comportant en outre :
- des moyens de lecture dans une base de données contenant des données d'identification (Idn) d'au moins un individu ;
- des moyens d'analyse (TrtVid) de la série d'images (S) agencés pour générer des données d'identification (IdX) à partir de caractéristiques physiques d'au moins un individu visibles sur l'une au moins des images de la série d'images (S) ;
- des moyens (4) agencés pour rechercher une correspondance entre :
- des données d'identification (IdX) de l'individu générées par les moyens d'analyse (TrtVid); et
- des données d'identification (Idn) d'individu lues dans la base de données à l'aide desdits moyens de lecture ;
- des moyens agencés pour générer un indicateur d'identification (IdentX) de l'individu à identifier dépendant de ladite recherche de correspondance.

10. Terminal selon la revendication 9, comportant en outre des moyens (5) agencés pour conditionner l'exécution d'au moins une application informatique (6) en fonction d'une part de la cohérence déterminée entre les deux images de la série d'images et d'autre part en fonction de l'indicateur d'identification (IdentX) de l'individu.

11. Terminal informatique portable (2) selon l'une quelconque des revendications 8 à 10, dans lequel les moyens (CptMvt) agencés pour générer des informations représentatives des positions dans l'espace du capteur optique (1) comportent des capteurs de données inertielles tels que des accéléromètres ou au moins un capteur gyroscopique ou au moins un capteur d'orientation tel qu'un capteur magnétique formant une boussole ou au moins un capteur de niveau pour connaitre l'inclinaison du capteur optique par rapport à un axe vertical ou des capteurs de localisation d'un système de géo localisation tel que de la géo localisation par satellites ou de tel que de la géo localisation par rapport à des antennes fixes distantes du terminal informatique portable.

## Patentansprüche

1. Verfahren zur Authentifizierung einer Erfassung eines Bildes (ic) einer dreidimensionalen Entität (X), wobei dieses Authentifizierungsverfahren von einer Vorrichtung durchgeführt wird und die Schritte umfasst:
- Erzeugen einer Serie (S) von Bildern (ia, ib, ic, id, ie) der Entität (X) mit Hilfe eines optischen Sensors (1), der um die Entität (X) verschoben wird;
- Verknüpfen jedes Bildes (ia, ib, ic, id, ie) der Bildserie (S) mit einer Information (Pa, Pb, Pc, Pd, Pe), die repräsentativ für die Position des optischen Sensors (1) im Raum zu dem Zeitpunkt ist, zu dem er dieses Bild erzeugt hat, wobei diese Position in Bezug auf ein gegebenes räumliches Bezugssystem (Ref) bestimmt wird; und
- Bestimmen einer Kohärenz zwischen zwei Bildern der Serie, indem eine Kohärenz verifiziert wird zwischen:
- einer scheinbaren Verschiebung des optischen Sensors (2), die durch einen Vergleich zwischen charakteristischen Punkten (Pt1, Pt2, Pt3, Pt4, Pt5, Pt6) bestimmt wird, die auf diesen beiden Bildern sichtbar sind; und
- einer geschätzten tatsächlichen Verschiebung des optischen Sensors, die durch einen Vergleich von Informationen bestimmt wird, die repräsentativ für Positionen des optischen Sensors (1) im Raum zu den Zeitpunkten sind, zu denen er diese beiden Bilder erzeugt hat.

2. Verfahren zur Identifizierung einer Einzelperson, die das Verfahren zur Authentifizierung einer Erfassung eines Bildes nach Anspruch 1 verwendet, umfassend die Schritte:
- Erzeugen der Bildserie (S), indem der optische Sensor (1) um die genannte Entität (X) verschoben wird, die ein Teil der zu identifizierenden Einzelperson ist; und
- Suchen einer Übereinstimmung (4) zwischen:
- Identifizierungsdaten (Idx), die anhand von physischen Eigenschaften der Einzelperson erzeugt werden, die aus mindestens einem der Bilder (ic) der Bildserie (S) stammen; und
- Identifizierungsdaten (Idn) der Einzelperson, die in einer vorab gespeicherten Datenbank enthalten sind, wobei diese in der Datenbank vorab gespeicherten Identifizierungsdaten (Idn) mit mindestens einer Identität (IdentX) einer Einzelperson verknüpft sind; und dann
- Erzeugen eines Identifizierungsindikators (IdentX) der zu identifizierenden Einzelperson während der genannten Übereinstimmungssuche (4).

3. Verfahren zur Identifizierung einer Einzelperson nach Anspruch 2, bei dem die Informationen, die repräsentativ für Positionen (Pa, Pb, Pc, Pd) des optischen Sensors (1) im Raum sind, erzeugt werden mit Hilfe von:
- mindestens einem Trägheitsdatensensor (CptMvt), wie z. B. einem Akzelerometer; oder
- mindestens einem Rotationsdatensensor, wie z. B. einem Gyrometer; oder
- mindestens einem Ausrichtungssensor, wie z B. einem Magnetsensor, der einen Magnetkompass bildet; oder
- mindestens einem Höhensensor, um die Neigung des optischen Sensors in Bezug auf eine vertikale Achse zu kennen; oder
- mindestens einem Lokalisierungssensor eines Geolokalisierungssystems, wie z. B. die Geolokalisierung durch Satelliten oder die Geolokalisierung in Bezug auf feststehende Antennen.

4. Verfahren zur Identifizierung einer Einzelperson nach einem der Ansprüche 2 oder 3, bei dem zumindest einige der auf den Bildern sichtbaren charakteristischen Punkte, die zum Bestimmen der scheinbaren Verschiebung des optischen Sensors (2) zwischen zwei Bildern (ia, ic) verwendet werden, physische Eigenschaften der zu identifizierenden Einzelperson umfassen, die zumindest auf diesen beiden Bildern (ia, ic) sichtbar sind.

5. Verfahren zur Identifizierung nach Anspruch 4, bei dem zumindest einige der physischen Eigenschaften der zu identifizierenden Einzelperson, die verwendet werden, um die scheinbare Verschiebung des optischen Sensors zu bestimmen, ebenso verwendet werden, um die Übereinstimmung zu suchen zwischen:
- den Identifizierungsdaten (ldX), die anhand der physischen Eigenschaften der Einzelperson erzeugt werden, die aus mindestens einem der Bilder (ic) der Bildserie (S) stammen; und
- den Identifizierungsdaten (Idn) einer Einzelperson, die in einer vorab gespeicherten Datenbank enthalten sind.

6. Verfahren zur Identifizierung einer Einzelperson nach einem der Ansprüche 2 bis 5, bei dem zumindest einige der charakteristischen Punkte (Pt1, Pt2, Pt3), die auf den Bildern sichtbar sind und die verwendet werden, um die scheinbare Verschiebung des optischen Sensors zu bestimmen, Eigenschaften der Bilder umfassen, die im Hintergrund der zu identifizierenden Einzelperson sichtbar sind.

7. Verfahren zur Identifizierung einer Einzelperson nach einem der Ansprüche 2 bis 6, bei dem die Datenbank Identifizierungsdaten zur Identifizierung mehrerer Einzelpersonen enthält, wobei diese vorab gespeicherten Identifizierungsdaten jeweils mit den Identitäten (IdentX) dieser Einzelpersonen verknüpft sind.

8. Tragbarer Computerterminal (2), wie z. B. ein Smartphone, umfassend:
- einen optischen Sensor (1), der angepasst ist, um eine Serie von Bildern (ia, ib, ic, id, ie) einer Einzelperson zu erzeugen, die aufgenommen wird, indem der Sensor um mindestens einen Teil der Einzelperson verschoben wird;
- Mittel (CptMvt), die ausgebildet sind, um Informationen (Dmvt) zu erzeugen, die repräsentativ für Positionen (Pa, Pb, Pc, Pd, Pe) des optischen Sensors (1) im Raum in Bezug auf ein gegebenes räumliches Bezugssystem (Ref) sind, **dadurch gekennzeichnet, dass** er ferner umfasst:
- Mittel, die ausgebildet sind, um jedes Bild einer Vielzahl von Bildern der Bildserie mit einer Information zu verknüpfen, die repräsentativ für die Position des optischen Sensors im Raum zu dem Zeitpunkt ist, zu dem er dieses Bild erzeugt hat, wobei jede Position (Pa, Pb, Pc, Pd, Pe) mit Hilfe der genannten Mittel (CptMvt) bestimmt wird, die ausgebildet sind, um Informationen zu erzeugen, die repräsentativ für die Positionen des optischen Sensors (1) sind; und
- Mittel (3) zur Bestimmung der Kohärenz zwischen zwei Bildern (ia, ic) der Serie (S) von Bildern, wobei diese Mittel (3) ausgebildet sind, um zu verifizieren, ob eine Kohärenz existiert zwischen:
- einer scheinbaren Verschiebung des optischen Sensors, die durch einen Vergleich zwischen charakteristischen Punkten (Pt1, Pt2, Pt3, Pt4, Pt5, Pt6) bestimmt wird, die auf diesen beiden Bildern (ia, ic) sichtbar sind; und
- einer tatsächlichen geschätzten Verschiebung des optischen Sensors, die durch einen Vergleich der Informationen bestimmt wird, die repräsentativ für die Positionen (Pa, Pc) des optischen Sensors (1) im Raum zu den Zeitpunkten sind, zu denen er diese beiden Bilder (ia, ic) erzeugt hat.

9. Terminal nach Anspruch 8, ferner umfassend:
- Lesemittel zum Lesen in einer Datenbank, die Identifizierungsdaten (Idn) zur Identifizierung mindestens einer Einzelperson enthält;
- Analysemittel (TrtVid) zur Analyse der Bildserie (S), die ausgebildet sind, um Identifizierungsdaten (IdX) anhand der physikalischen Eigenschaften mindestens einer Einzelperson zu erzeugen, die auf mindestens einem der Bilder der Bildserie (S) sichtbar sind;
- Mittel (4), die ausgebildet sind, um eine Übereinstimmung zu suchen zwischen:
- Identifizierungsdaten (IdX) zur Identifizierung einer Einzelperson, die durch die Analysemittel (TrtVid) erzeugt werden; und
- Identifizierungsdaten (Idn) zur Identifizierung der Einzelperson, die in der Datenbank mit Hilfe der genannten Lesemittel gelesen werden;
- Mittel, die ausgebildet sind, um einen Identifizierungsindikator (IdentX) der zu identifizierenden Einzelperson während der genannten Übereinstimmungssuche zu erzeugen.

10. Terminal nach Anspruch 9, ferner umfassend Mittel (5), die ausgebildet sind, um die Ausführung mindestens einer Computeranwendung (6) in Abhängigkeit einerseits der zwischen den beiden Bildern der Bildserie bestimmten Kohärenz und andererseits in Abhängigkeit des Identifizierungsindikators (IdentX) der Einzelperson zu konditionieren.

11. Tragbarer Computerterminal (2) nach einem der Ansprüche 8 bis 10, bei dem die Mittel (CptMvt), die ausgebildet sind, um Informationen zu erzeugen, die repräsentativ für Positionen des optischen Sensors (1) im Raum sind, Trägheitsdatensensoren umfassen, wie z. B. Akzelerometer, oder mindestens einen gyroskopischen Sensor oder mindestens einen Ausrichtungssensor, wie z. B. einen Magnetsensor, der einen Magnetkompass bildet, oder mindestens einen Höhensensor, um die Neigung des optischen Sensors in Bezug auf eine vertikale Achse zu kennen, oder Lokalisierungssensoren eines Geolokalisierungssystems, wie z. B. die Geolokalisierung durch Satelliten oder z. B. die Geolokalisierung in Bezug auf feststehende Antennen, die entfernt zum tragbaren Computerterminal sind.

## Claims

1. A method of authenticating the capture of an image (ic) of a three-dimensional entity (X), the method being implemented by a device and comprising the following steps:
• generating a series (S) of images (ia, ib, ic, id, ie) of the entity (X) with the help of an optical sensor (1) moved around the entity (X);
• associating each image (ia, ib, ic, id, ie) of the series of images (S) with information (Pa, Pb, Pc, Pd, Pe) representative of the position of the optical sensor (1) in three-dimensional space at the moment it generated the image, the position being determined relative to a given three-dimensional reference frame (Ref); and
• determining whether there is consistency between two images of the series by verifying whether there is consistency between:
• an apparent movement of the optical sensor (1) as determined by comparing characteristic points(Pt1, Pt2, Pt3, Pt4, Pt5, Pt6) visible in the two images; and
• an estimated real movement of the optical sensor as determined by comparing information representative of three-dimensional positions of the optical sensor (1) at the moments when it generated the two images.

2. An identification method for identifying an individual, using the method of authenticating the capture of an image, according to claim 1, the identification method comprising the steps of:
• generating the series (S) of images by moving the optical sensor (1) around said entity (X) that is a portion of the individual to be identified; and
• searching for a match (4) between:
• identification data (Idx) generated from physical characteristics of the individual taken from at least one of the images (ic) of the series (S) of images; and
• individual identification data (Idn) contained in a previously registered database, the identification data (Idn) previously registered in the database being associated with at least one identity (IdentX) of an individual ; and then
• generating an identification indicator (IdentX) of the individual to be identified depending on said search for a match (4).

3. The identification method for identifying an individual according to claim 2, wherein the information representative of positions (Pa, Pb, Pc, Pd) of the optical sensor (1) in three-dimensional space are generated with the help of:
• at least one inertial data sensor (CptMvt) such as an accelerometer; or
• at least one rotation data sensor such as a gyro; or
• at least one orientation sensor such as a magnetic sensor forming a compass; or
• at least one level sensor for obtaining the angle of inclination of the optical sensor relative to a vertical axis; or
• at least one location sensor of a geolocation system such as the satellite geolocation system or for geolocation relative to fixed antennas.

4. The identification method for identifying an individual according to claim 2 or claim 3, wherein at least some of the characteristic points visible in the images and used for determining the apparent movement of the optical sensor (1) between two images (ia, ic) comprise physical characteristics of the individual to be identified, which characteristics are visible in at least these two images (ia, ic).

5. The identification method for identifying an individual according to claim 4, wherein at least some of the physical characteristics of the individual to be identified that are used for determining the apparent movement of the optical sensor are also used for searching for a match between:
• the identification data (IdX) generated from the physical characteristics of the individual taken from at least one of the images (ic) of the series (S) of images; and
• the individual identification data (Idn) contained in a previously registered database.

6. The identification method for identifying an individual according to any one of claims 2 to 5, wherein at least some of the characteristic points (Pt1, Pt2, Pt3) visible in the images and that are used for determining the apparent movement of the optical sensor comprise characteristics in the images that are visible in the background of the individual to be identified.

7. The identification method for identifying an individual according to any one of claims 2 to 6, wherein the database contains identification data for a plurality of individuals, the previously registered identification data being associated with respective identities of the individuals (IdentX).

8. A portable computer terminal (2) such as a smart phone, comprising:
• an optical sensor (1) adapted to generate a series of images (ia, ib, ic, id, ie) of an individual (X) taken by moving the sensor around at least a portion of the individual ; and
• means (CptMvt) arranged to generate information (DMvt) characteristic of the three-dimensional positions (Pa, Pb, Pc, Pd, Pe) of the optical sensor (1) relative to a given three-dimensional reference frame (Ref);
the terminal being **characterized in that** it further comprises:
• means arranged to associate each image of a plurality of images in the series of images with information representative of the three-dimensional position of the optical sensor at the moment it generated the image, each position (Pa, Pb, Pc, Pd, Pe) being determined with the help of said means (CptMvt) arranged to generate information representative of the positions of the optical sensor (1); and
• means (3) for determining consistency between two images (ia, ic) of the series (S) of images, these means (3) being arranged to verify whether consistency exists between:
• an apparent movement of the optical sensor determined by comparing characteristic points (Pt1, Pt2, Pt3, Pt4, Pt5, Pt6) visible in these two images (ia, ic); and
• an estimated real movement of the optical sensor determined by comparing information representative of the three-dimensional positions (Pa, Pc) of the optical sensor (1) at the moment at which it generated these two images (ia, ic).

9. The terminal according to claim 8, further comprising:
• read means for reading a database containing identification data (Idn) for at least one individual;
• analysis means (TrtVid) for analyzing the series (S) of images and arranged to generate identification data (IdX) from physical characteristics of at least one individual visible in at least one of the images of the series (S) of images;
• means (4) arranged to search for a match between:
• individual identification data (IdX) generated by the analysis means (TrtVid); and
• individual identification data (Idn) read from the database using said read means; and
• means arranged to generate an identification indicator (IdentX) of the individual to be identified depending on said search for a match.

10. The terminal according to claim 9, further comprising means (5) arranged to conditionate the execution of at least one computer application (6) as a function firstly of the consistency determined between the two images of the series of images and secondly as a function of the identification indicator (IdentX) of the individual.

11. The portable computer terminal (2) according to any one of claims 8 to 10, wherein the means (CptMvt) arranged to generate information representative of the three-dimensional positions of the optical sensor (1) comprise inertial data sensors such as accelerometers or at least one gyro sensor or at least one orientation sensor such as a magnetic sensor forming a compass or at least one level sensor for determining the angle of inclination of the optical sensor relative to a vertical axis or location sensors of a geolocation system such as the satellite geolocation system or such as geolocation relative to fixed antennas remote from the portable computer terminal.
